# EUROPEAN PATENT APPLICATION

(11) **EP 3 151 357 A1**
(43) Date of publication of application: **05.04.2017**
(21) Application number: 15187553.1
(22) Date of filing: 30.09.2015
(51) Int. Cl.: H02J 3/38, H01L 31/068, H01M 10/46, H02S 20/00, H02J 7/35, H02S 40/38, H01M 10/6563, H01M 10/6572, H01M 10/659

(54) **SOLAR POWERPACK**

(71) Applicant: Arndt, Paul Riis, 8270 Hojbjerg (DK)
(72) Inventor: ARNDT, Paul Riis, 8270 Højbjerg (DK)
(74) Representative: Awapatent A/S

(57) **Abstract**

The present invention relates to a compact, fully integrated solar power storage module which comprises a photovoltaic PV solar cell (6), a Maximum Power Point Tracking MPPT Charge Controller (3) and a battery unit (2), which may optionally be fitted with a DC/AC converter or inverter.

## Description

### FIELD

The present invention relates to a compact, fully integrated solar power storage module which comprises a photovoltaic (PV) solar cell, a Maximum Power Point Tracking (MPPT) Charge Controller and a battery unit, and may optionally be fitted with a DC/AC converter or inverter. The power storage module is primarily designed to be charged by the integrated PV cell, but may also be adapted with connectors for being charged by external sources. The power storage module is further designed to be readily installable as a compact stand-alone device, having dimensions substantially matching a standard PV solar cell. The invention further relates to the use the solar power storage module in various electrical appliances, including being integrated with a vapor compression air cooling device.

### BACKGROUND

The Earth receives 174,000 terawatts (TW) of incoming solar radiation (insolation) at the upper atmosphere. Approximately 30% is reflected back to space while the rest is absorbed by clouds, oceans and land masses. The spectrum of solar light at the Earth's surface is mostly spread across the visible and near-infrared ranges with a small part in the near ultraviolet. The amount of solar energy reaching the surface of the planet is actually so vast that in one year it is about twice as much as will ever be obtained from all of the Earth's non-renewable resources of coal, oil, natural gas, and mined uranium combined, according to the Global Climate and Energy Project (GCEP) report produced by Stanford University. Solar energy and other renewable energy resources such as water- and windpower are thus increasingly being considered as alternatives to traditional oil and coal based energy sources.

Traditional fossil fuel powered energy is distributed in our societies via "the grid", and therefore offers the end-user the advantage of being available day and night, at least in the first world countries where power outages do not occur frequently.

The availability of renewable energy to the grid, including solar is steadily increasing, but diesel generators and other fossil fuel continue to dominate off-grid power supplies To make renewable energy more attractive to the end user, it should thus be supplied by means of a stand-alone, easy to install device which can connect with a variety of electrical appliances, having a back-up storage function for periods where the energy production from the renewable source is limited.

Solar energy is a renewable energy source which has grown in popularity over the past 10-15 years, in part due to national subsidizing programs, but mostly due to dramatically lowered production prices for PV solar cells. From 1998-2011, the price of commercial PV systems dropped by 5-7 percent annually and will most likely continue to drop.

The logical solution to the back-up problem for solar energy has been to connect solar cells with batteries, typically lead batteries (e.g. truck batteries). In such a setup the battery will be charged during periods of sunlight, and discharged during periods of little or no sunlight, such as during the night. The advantage of this setup is that it does not require complicated control systems to charge lead batteries, and the capacity of the system can easily be increased by adding more of the relatively cheap lead batteries.

The drawback of such a system is, however, that it requires extensive installation and cabling on the premises of the end user. Moreover, lead batteries are environmentally problematic and heavy, and their content of acid render them hazardous. Furthermore, the capacity of lead batteries is generally only 50-75% depth of discharge. The capacity decreases rapidly with increasing temperature, and must therefore be placed out of direct sunlight, both factors decreasing their effective lifetime compared to lithium batteries. Finally, the physical dimensions and weight of lead batteries precludes integrating them in a stand-alone, integrated solar power storage module.

There are alternatives to old-fashioned lead batteries, such as Absorbent Glass Mat (AGM), which became popular in the early 1980s as a sealed lead acid battery for military aircraft, vehicles and UPS to reduce weight and improve reliability. The acid is absorbed by a very fine fiberglass mat, making the battery spill-proof. While regular lead acid batteries need a topping charge every six months to prevent the buildup of sulfation, AGM batteries are less prone to this and can sit in storage for longer before a charge becomes necessary. However, AGM and other sealed batteries do only operate in a temperature span of app 5-30 °C and should be installed away from any heat source. Manufacturers recommend halting charge if the battery core reaches 49 °C.

As an example of a solar power storage module based on AGM technology, the MiniJOULE (www.minijoule-professional.com) is a 60Wp PV system with a small AGM battery bank, designed for mobility. The system is separated into a trolley containing the electronics, including the inverter, controller and battery, and a small PV panel.

A more important alternative battery technology is Lithium-ion. Li-ion batteries are becoming a common replacement for the lead acid batteries that have been used historically for golf carts and utility vehicles. Instead of heavy lead plates and acid electrolyte, lightweight lithium-ion battery packs can provide the same voltage as lead-acid batteries, so no modification to the vehicle's drive system is required. Futhermore, compared to lead-acid batteries, Li-ion batteries are more tolerant of high temperatures, both during charging and de-charging, have the ability to deliver continuous high power until the battery is exhausted, and finally also tolerate a larger depth of discharge.

Lithium-ion batteries are also beginning to find their way into solar power storage modules. Very recently Tesla has marketed their "Powerwall", which is a home battery that charges using electricity generated from solar panels. The powerwall comes in two versions, both build on Lithium-ion battery technology. One model is optimized for daily cycling, such as for an off-grid situation; the other for being a backup battery. Tesla uses proprietary technology for packaging and cooling the cells in packs with liquid coolant. The daily cycle 7 kWh battery uses nickel-manganese-cobalt chemistry; the 10 kWh battery uses a nickel-cobalt-aluminum cathode. In both cases the solar panel is detached from the battery itself.

The eCube (www.solarelectrix.de) system is another commercial 2-part PV system where the hardware and batteries are again separated from the PV panels; and where the customer can choose between a lead battery and a primitive Li-ion battery version based on a series of small AA-type batteries. Another trend is integrating solar cells tailored directly into a specific application, such as calculators.

Attempts towards developing more compact solutions in the solar power storage area have however largely been focused on integrating batteries, control units, connectors and other electronics in a single unit, whilst keeping the one or more PV solar cell panels separate. The explanation for this trend is likely the concern that the high temperatures reached on the surface of a PV panel placed in direct sunlight will affect the performance of a battery placed in close proximity to the PV panel.

High surface temperatures of PV panels is a well-known problem. Flat PV panels are rated at Standard Test Conditions (STC) of 25°C with a solar intensity of 1,000 watts per square meter and 1.5 atmospheres (about a 60° sun angle), and the listed power of a solar cell is the power measured under STC conditions. However, on a hot summer's day, it is not uncommon for a solar cell to reach a temperature of 75 °C. The efficiency of some cheap solar cells can decrease more than 0.5% for every 1 °C above 25 °C. Under such conditions the efficiency of a solar cell could drop as much as 25%.

The development of solar power storage modules has therefore focused on two-part devices where the temperature sensitive equipment can be placed a distance from the solar panel, even if a fully integrated device would be more practical and easier to fit in at the end users' premises.

There thus remains a need for a fully integrated solar power storage module, wherein the PV panel, a battery unit, a charge controller and all electronic components are assembled in one discrete unit, which can be moved around and connected in a "plug and play" fashion to various electrical appliances where required. The solar power storage module should further be available in both AC and DC voltage versions, and with the option of connecting additional PV panels and other external power sources.

### DEFINITIONS

As used herein, the abbreviation "PV" refers to Photovoltaic. Throughout the application, the terms "PV-panel", "PV panel" and "PV solar cell panel" all refer to a photovoltaic solar cell or photovoltaic solar cell assembly. The abbreviation "MPPT" refers to Maximum Power Point Tracking, which is a PV panel optimizer usually combined with a battery charge controller. The term "battery unit" refers to one or more rechargeable batteries, a battery pack or an array of batteries. The term "Li-ion" or "Lithium ion" battery refers to a rechargeable Lithium-ion battery, battery pack or array of batteries. The term "DC" refers to Direct Current, and the term "AC" refers to Alternating Current. The term "Converter" refers to a DC/DC converter, used to change voltage from 24-48V. The term "Inverter" refers to an offgrid inverter, which is used to transform 24V DC to AC. The term "grid" refers to an interconnected network for delivering electricity from suppliers to consumers, typically the main or national electrical grid. Similarly, the term "offgrid" refers to not being connected to a grid, mainly used in terms of not being connected to the main or national electrical grid. The term "load" refers to an electrical component or portion of a circuit that consumes electric power appliances and lights. "Load" may also refer to the power consumed by a circuit.

### SUMMARY OF INVENTION

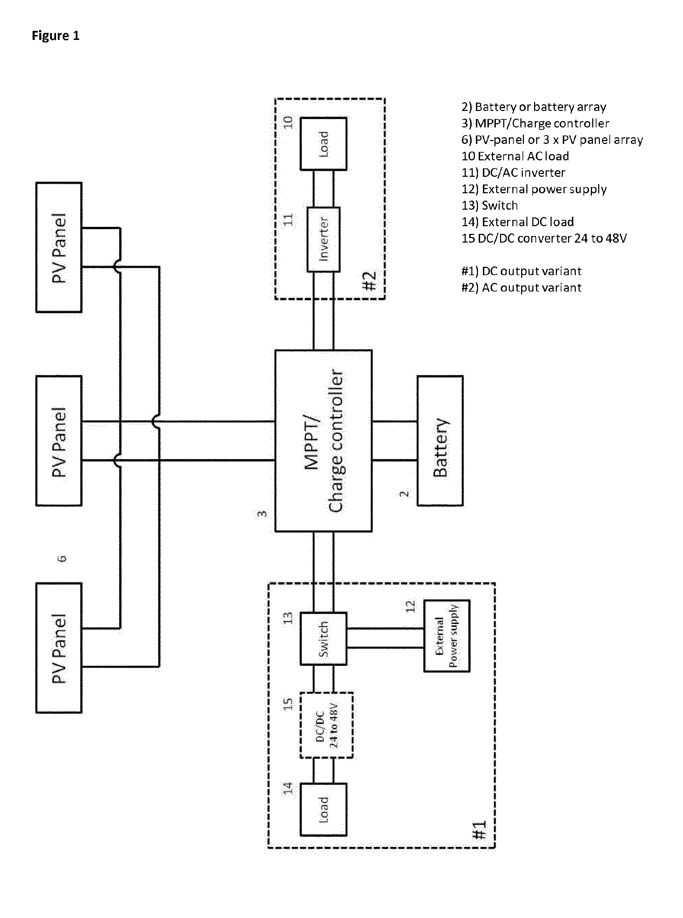

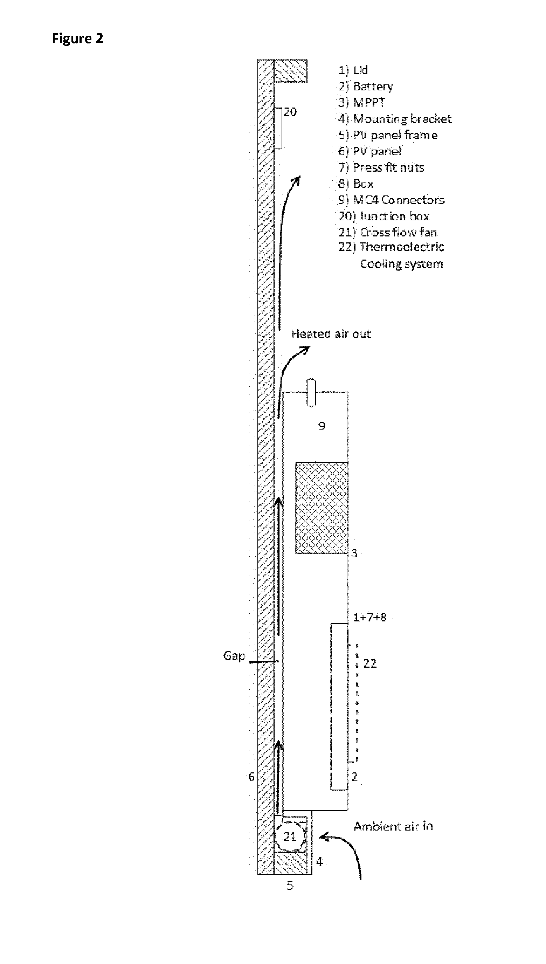

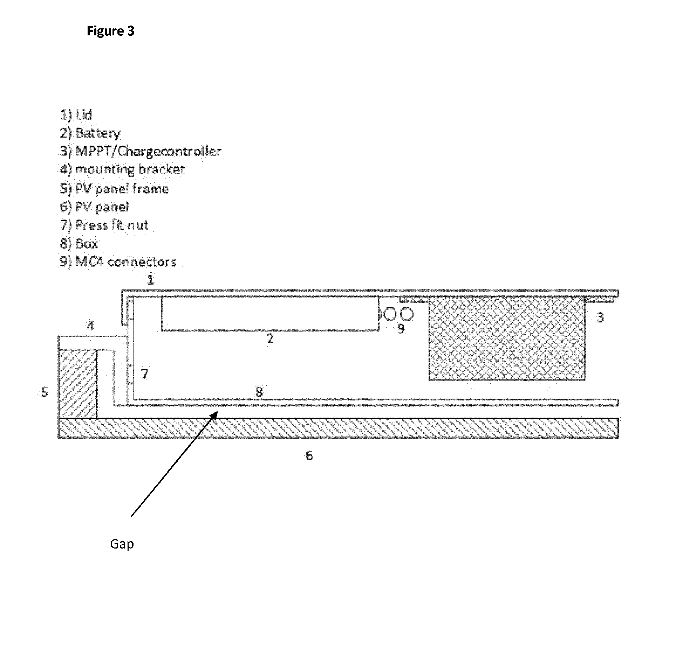

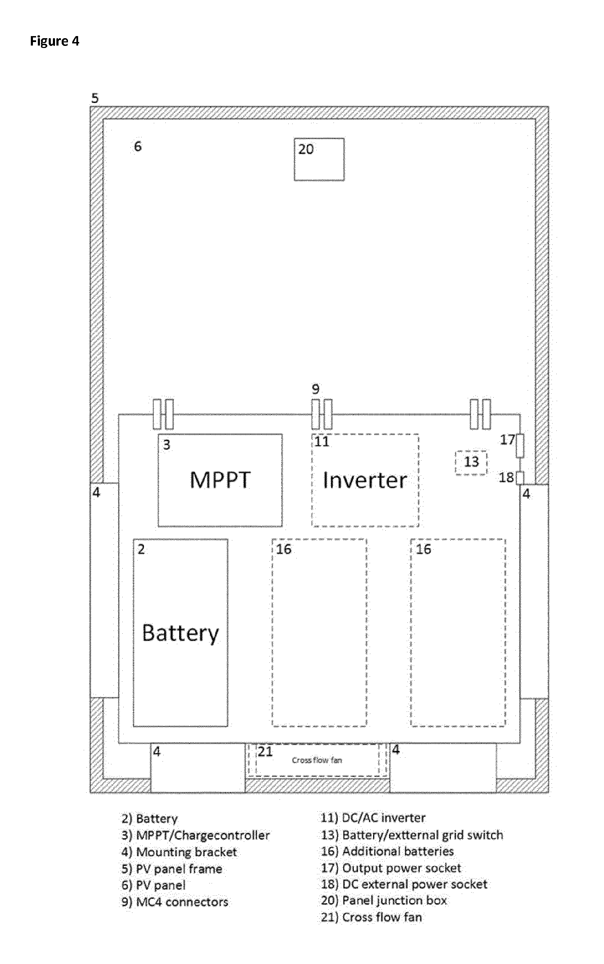

In the following, reference is made to numbered components shown in figures 1-4.

The inventors of the present application have found that it is possible under certain circumstances to integrate a standard PV solar cell panel (6), a battery unit (2), an MPPT charge controller (3) and all necessary electronic components in one compact, stand-alone unit, wherein all the mentioned components are mounted on the back of the PV-panel and by containing the MPPT charge controller and battery unit (2) within a compact, closed box (8), these components are shielded against access and the environment. The resulting solar power storage module has the approximate outer dimensions of a standard PV solar cell, for example approximately 1600x1060 mm and a depth of about 80 mm. Other standardized PV solar cell formats have outer dimensions of approximately 544x433 mm, 818x808 mm, 564x360 mm and 1482x676 mm. The exact dimensions may vary between variants.

The main challenge has been to abate the harmful effects towards batteries of the high temperatures developing on the rear surface of a solar panel placed in full sunlight, which has now been overcome by a deliberate combination of battery type, charge controller and mechanical design of the solar power storage module, together with suitable insulation and cooling means, which will be further described in the following.

In a **first aspect** there is thus provided a solar power storage module, comprising the following components:
a. a battery unit (2);
b. a PV panel (6) that charges the battery unit (2);
c. a Maximum Power Point Tracking (MPPT) charge controller electrically connected to the battery unit (2) and the solar cell unit (6), the MPPT continuously
   I. comparing the output of the PV panel (6) with the actual battery voltage,
   II. supplying the required output from the PV panel (6) as well as from the battery unit (2), to match the load (10+14)
   III. optimizing the output of the PV solar panel (6) and
   IV. converting the output of the PV solar panel (6) to the optimum voltage required to charge the battery unit (2);
d. insulating means for reducing the heat transfer from the PV panel (6) to the battery unit (2), and
e. cooling means for maintaining the battery unit (2) at a temperature not exceeding a threshold value,
   wherein all components a-e are contained within a single module.

The solar power storage module according to the present invention thus comprises three functional components: A PV solar cell panel (6), a MPPT charge controller (3) and a battery unit (2), and additionally comprises insulation and cooling means to prevent the overheating of temperature sensitive components. This is also supported by the way the components are mechanically integrated and assembled.

The battery unit (2) is required to store the generated energy that is not being used, either due to intermittent loads or due to an overproduction from the PV-panel (6). This enables the solar power storage module to continue to discharge the required energy when there is no power generation, or when a load is higher than the generated power.

The Maximum Power Point Tracking (MPPT) charge-controller (3) is responsible for transforming the voltage down to a level that can be used to charge the Lithium ion battery and ultimately power the attached application.

The mechanical design has been developed to solve the following challenges:
- Preventing the components, especially the batteries, from overheating
- Preventing unintended access to the components
- Allowing easy and efficient assembly during production
- Allowing easy expansion of the system, with more batteries and/or PV panels
- Ensuring a good integration between the electrical components and PV panels

The mechanical construction of the solar power storage module is thus designed to passively enable a convectional flow of air through the module, which is sufficient under normal conditions to maintain suitable working temperatures for the battery unit (2) and electronic components. For geographical areas having excessively hot climates, the solar power storage module may be equipped with active means for removing heat, which may be powered by the integrated battery unit (2).

Various embodiments of the invention are disclosed in the following detailed description and the accompanying drawings.

### FIGURES

**Figure 1** is a diagram showing the electrical component design of the DC output version (#1) and AC output version (#2) of the solar power storage module, including extension options.
**Figure 2** is a vertical view of a simplified solar power storage module, including indications of airflows through the gap between component box (8) and backside of the PV panel (6).
**Figure 3** is a sidewise view of the components of the solar power storage module which also indicates the gap between component box (8) and backside of the PV panel (6), through which a cooling airflow may pass during operation of the solar power storage module.
**Figure 4** is a rear view of a simplified solar power storage module, which indicates the various components and their approximate relative placement.

### DETAILED DESCRIPTION OF THE INVENTION

The solar power storage module according to the present invention comprises three functional components: A PV solar cell panel (6), a MPPT charge controller (3) and a battery unit (2), and additionally comprises insulation means and cooling means to prevent overheating of temperature sensitive components. This is also supported by the way the components are mechanically integrated and assembled.

In a **first aspect** there is thus provided a solar power storage module, comprising the following components:
a. a battery unit (2):
b. a PV panel (6) that charges the battery unit (2);
c. a Maximum Power Point Tracking (MPPT) charge controller electrically connected to the battery unit (2) and the solar cell unit (6), the MPPT continuously
   I. comparing the output of the PV panel (6) with the actual battery voltage,
   II. supplying the required output from the PV panel (6) as well as from the battery unit (2), to match the load (10+14)
   III. optimizing the output of the PV solar panel (6) and
   IV. converting the output of the PV solar panel (6) to the optimum voltage required to charge the battery unit (2);
d. insulating means for reducing the heat transfer from the PV panel (6) to the battery unit (2), and
e. cooling means for maintaining the battery unit (2) at a temperature not exceeding a threshold value,
wherein all components a-e are contained within a single module.

The main purpose of the solar power storage module according to the present invention is to generate, accumulate and distribute electrical energy to be used off-grid, and it comes in two variants: a Direct Current (DC) variant, and an Alternating Current (AC) variant. The two variants are meant for different purposes and end-uses, but are based on the same inventive concept and share a number of technical features which in the following will be described in further detail.

In a preferred embodiment the solar power storage module has the approximate outer dimensions of a standard PV solar cell (6), for example approximately 1600x1060 mm and a depth of about 80 mm. Other standardized PV solar cell formats have outer dimensions of approximately 544x433 mm, 818x808 mm, 564x360 mm and 1482x676 mm.

The solar power storage module according to the present invention functions by converting solar energy into electricity by the photovoltaic effect, which captures energy from sunlight, and, in principle also from other light sources such as artificial light. The solar energy captured by the PV solar cell panel (6) is not consistent due to changes in the surrounding environment such as variations in intensity of sunlight (solar irradiation) and ambient temperatures, and therefore a battery unit (2), which is electrically connected to and charged by the solar cell unit (6), is used to store the electricity generated by the PV solar cell (6).

In order to maximize the efficiency of the capturing of solar energy by the battery unit (2), a Maximum Power Point Tracking (MPPT) charge controller (3) is electrically connected to the battery unit (2) and the solar cell unit. The MPPT charge controller (3) is an electronic DC to DC converter that continuously compares the output of the PV solar cell panel (6) with the actual battery voltage, and optimizes the match between the PV panel (6) and the battery unit (2) by converting a higher voltage DC output from solar panels down to the lower voltage needed to charge the battery unit (2). For load output the current is drawn directly from the MPPT (3). The battery unit (2) is only used as a backup if the load requirement is higher than the actual PV panel production. If the load requirement is lower than the actual PV panel production, the surplus energy is used to charge the battery unit (2).

During the operation of the solar power storage module according to the present invention, the PV solar cell panel (6) is heated to temperatures considerably above ambient; typically at least 20-30 °C above ambient temperature, and it is not uncommon for a PV solar cell to reach a temperature of 75 °C. This is a problem since a typical PV solar panel has a negative temperature coefficient, and thus the efficiency of a solar cell can drop as much as 25% under hot conditions.

The increasing temperature of the PV solar cell panel (6) during operation is also a problem for the attached battery unit (2), as batteries are sensitive to both high charging and decharging temperatures. It is therefore a central object of the present invention to provide means for preventing the battery unit (2) to overheat. These means comprise both insulation and cooling means, which will be described further in the following together with a desciption of the individual components of the invention.

The MPPT charge controller (3) and battery unit (2) are contained within a compact, closed box (8) which serves the purposes of firstly creating a layer of stationary air, which insulates the battery from the heat emanating from the rear side of the PV solar panel (6), secondly prevents any accidental access to components carrying an electric current, and thirdly protects the components from the environment, thereby increasing component life and durability. The box (8) is closed off with a top lid (1) which may serve as a platform to mount the components (MPPT, battery, inverter and misc. printed circuit boards (2+3), as well as for closing off access. The compact design of the box (8) allows for integration with various types of commercial PV solar panels. Thus, in one embodiment the battery unit (2) and MPPT charge controller (3) are contained within a box (8) closed with a top lid (1). In a preferred embodiment the battery unit (2) and MPPT charge controller (3) are fastened to the underside, or subsurface of the top lid (1). In another preferred embodiment the top lid (1) functions as a heat sink.

**The PV panel (6)** is responsible for the generation of electrical energy. The current and voltage is dependent on the type and number of panels. According to a preferred embodiment of the present invention, backside contact or rear contact solar cell panels are employed, as they achieve higher efficiency by moving all or part of the front contact grids to the rear, or backside of the device. The higher efficiency potentially results from the reduced shading on the front of the cell. In another preferred embodiment one PV solar cell panel (6) is integrated in the storage module; it is however possible to connect at least one or two more PV panels dependent on the solar power storage module variant and the requirements by the end user.In one embodiment the solar power storage module is equipped with one PV solar cell panel (6). In another embodiment the solar power storage module is equipped with a total of two PV solar cell panels. In yet another embodiment the solar power storage module is equipped with a total of three PV solar cell panels.

In an embodiment, the one or more PV solar cell panels are chosen from commercially available options having an expected daily production between 1,5kWh-2kWh, dependent of the geographical location, time of year and the specific angle and orientation of the panel. In a preferred embodiment, the chosen PV solar cell panel (6) is a SunPower E20/333Wp panel.

**The battery unit (2)** is required to store the generated energy that is not being used, either due to intermittent loads or due to an overproduction from the PV solar cell panel (6). This enables the solar power storage module to continue to discharge the required energy when there is no power generation, or when a load is higher than the generated power. The compact design of the solar power storage module according to the present invention requires batteries with a high energy density and a high efficiency, leading to lower heat generation. Not least due to the rapid development of smartphones, the Li-ion battery technology has improved significantly over the last decade. Their high energy density, good charge/discharge capabilities and efficient charging makes them ideal for use in compact designs.

The high energy density of Lithium ion (Li-ion) batteries further helps keeping a small form factor which is crucial for the desired compact design of the solar power storage module. However just as importantly, Li-ion batteries are known to perform significantly better at high operating temperatures when compared to lead batteries. The charge/discharge range does not significantly decrease at temperatures up to 40 °C, and Lithium ion batteries can withstand temperatures up to 70-90 °C without permanent damage. However, repeated exposure to high temperatures do decrease the number of charge cycles, and must thus be kept to a minimum, and for prolonged periods the temperature should not exceed 45 °C.

In a preferred embodiment the solar power storage module of the present invention comes equipped with one Lithium-ion battery. In another embodiment the solar power storage module is equipped with two or more Lithium-ion batteries. In a preferred embodiment the Lithium-ion battery is equipped with a thermal sensor coupled to the MPPT, which allows the MPPT to discontinue the charge- or discarge procedure if the temperature raises above a preset value.

Other sources of energy than solar energy may be used to charge the battery, for example in the abscence of sufficient sunlight, and in a preferred embodiment the solar power storage module of the present invention therefore comes equipped with connectors for charging the one or more Lithium ion batteries with energy from other sources than the build-in PV solar cell panel (6), including the possibility to connect to the grid.

The Li-ion battery can be selected from lithium iron phosphate batteries, lithium cobaltate batteries, lithium manganate batteries, lithium cobalt manganate batteries, or any combination thereof. Lithium-Ion batteries covers a wide range of different variants. Types like LiNiₓMn_{y}Co_{z}O₂, LiMn₂O₄ or LiFePO₄ can all be used. Other battery unit types fulfilling the requirements of form factor and capacity are also possible.

In another embodiment the battery unit (2) comprises a thermal sensor and an integrated thermoelectric element (22), such as a Peltier device, for cooling the battery to optimal operating conditions. The thermoelectric element (22) is coupled with a small fan (21) and two small heatsinks. Internally in the battery, the thermoelectric element (22) induces a cold side that cools the heatsink attached to the cold side. This heatsink cools the surrounding air, which is blown out past the one or more batteries by the fan, thereby cooling them. The warm side is connected to a heatsink on the external side of the battery unit (2), where the heat is dissipated. The thermoelectric element (22) as well as the fan (21) draw power from the battery unit (2), and are controlled by a built-in microchip. The thermal sensor placed on the battery unit (2) tells the system when to activate.

In a preferred embodiment, the chosen Li-ion battery is a 24V 19.8Ah Li-CNM (Lithium Nickel Manganese Cobalt Oxide) battery contained in a stainless steel case.

**The Maximum Power Point Tracking (MPPT) charge-controller** (3) is responsible for transforming the voltage down to a level that can be used to charge the Lithium ion battery and ultimately power the attached application. The MPPT capabilities enables it to optimize the power output from the PV-panel (6), ensuring the highest power generation possible.

The MPPT (3) contains a thermal sensor which is coupled to the battery unit (2). This allows the MPPT (3) to discontinue the charge- or discarge procedure if the temperature raises above a preset value.

When operating, the MPPT (3) charges the battery unit (2) when the power from the PV-panel (6) is greater than the load. If the power from the PV-panel (6) falls below the required load, the battery unit (2) will discharge to compensate if there is enough energy stored. If the battery unit (2) is fully charged and the power from the PV-panel (6) exceeds the required load, then the power production will decrease as the MPPT (3) adjusts the electrical resistance.

The two types of charge controllers most commonly used in solar power systems are pulse width modulation (PWM) and maximum power point tracking (MPPT). Both adjust charging rates depending on the battery's charge level to allow charging closer to the battery's maximum capacity as well as monitor battery temperature to prevent overheating. The MPPT was chosen over the simpler PWM as it can provide a substantial increase in the power generated. Getting the maximum amount of energy out of the solar panels is a high priority when the solar power storage module of the present invention is used to power eg. air-conditioning units, as most to all of the generated power is expected to be used. This is not always the case with the consumer (AC) variant of the solar power storage module.

Dependent of which variant is required, the MPPT needs to be able to handle up to 20A from the PV panel side. This enables connecting up to three PV panels or more in parallel for a total peak power of 1kW. Additionally the MPPT needs to have a tracking range able to cover 54,7V as well as being able to handle the open circuit voltage at 65,3V+15% or approximately 75V.

By using a MPPT charge controller, the tracking range can become an issue. As most telecom cooling systems require 48V, it would be optimal to have a DC variant of the solar power storage module running at 48V as well. This could decrease the maximum current required for the MPPT and inverter to handle, which would allow using smaller components. However, the general MPPT tracking range for 48V systems range from 60-100V to 60-120V. As most high performing 96 solar cell panels have a rated voltage below the minimum tracking values (eg. 52V), a 48V system would end up reducing the potential power generated by the solar panels. Aditionally, panels with a rated voltage below 60V would have problems charging the battery even without the MPPT limitations, as the correct charge voltage for 48V li-ion batteries is aproximetly 56-58,4V This would result in slow charge and limited battery capacity amongst other complications. To accommodate this, a DC/DC 24V to 48V (15) converter can be installed between the load and the MPPT/Charge controller. Alternatively, two 72 solar cell panels can be used instead. They each have a maximum power voltage around 35-37V, so by connecting two PV panels in serial, the voltage increases to 70-74V, well within the tracking range of a 48V MPPT. This setup can be expanded with two PV panels more in serial. This therefore is a preferred embodiment of the invention aimed specifically for the DC variant used for telecom cooling systems.

The limitation in the MPPT tracking range when using 48V batteries is due to the charge algorithm of the MPPT. As most MPPTs are only able to transform the voltage down to the charge voltage, a safety cutoff is implemented in order to guarantee a sufficiently high voltage when charging. For 12V/24V/48V batteries the cutoff is usually at, respectively, 15V/30V/60V.

It is moreover important when using Li-ion batteries that the MPPT has a specialized charging algorithm for that specific type. Otherwise there is a large risk of damaging the batteries. This significantly limits the number of viable MPPT's on the market, as the usage of Li-ion batteries is still new, and not yet supported as standard.

Identifying the right MPPT required the comparison of at least 20 different options, where not only price, dimension and capacity were decisive. The following requirements for the MPPT had to be satisfied while attempting to keep the costs to a minimum:
- Able to switch between 24 and 48V batteries.
- Able to handle a 65.3V open circuit voltage
- Able to track at 54.7V +/-10%
- Minimum charge current at 20A
- Minimum panel input of 1kW
- Minimum load output of 0.66kW
- Maximum height of 60mm to satisfy the requirements of a compact design
- Allow for charging a variety of battery types, but at least Lithium-Ion, where some MPPT types are limited to lead acid only
- Allow for a large range of PV-panels with varying capacities and dimensions

In a preferred embodiment, the MPPT (3) employed is a 40A MPPT from the company I-panda (Shenzhen I-Panda New Energy Technology & Science Co., Ltd.). Due to the safety cutoff for 48V batteries mentioned above, a 40A MPPT is required to deliver 1kW output.

### Mechanical design

The mechanical design of the solar power storage module according to the present invention has been developed to solve the following challenges:
- Preventing the components, especially the batteries, from overheating
- Preventing unintended access to the components
- Allowing easy and efficient assembly during production
- Allowing easy expansion of the system, with more batteries or PV panels
- Ensuring a good integration between the electrical components and PV panels

The mechanical components comprise a box-shaped underpart (8), made from folded sheet metal. Press fit nuts (7) are installed in the box sides to ease the assembly process. A mounting bracket (4) is installed on two or three of the box sides (dependent of the final size) through the press fit nuts. Self-tapping screws are used to mount the construction on the rear surface frame (5) of the solar panel (6). Three pairs of MC4 connectors (9) are installed to allow modular expansion.

The top lid (1) may serve as a platform to mount the components (MPPT, battery, inverter and misc. printed circuit boards (2+3)), as well as for closing off access. The components are fixated to the lid using bolts and press fit nuts. The battery, lacking any mounting holes, is held in place using special designed brackets, designed to fixate one or two batteries within the same footprint. The top part is then connected with the MC4 connectors (9) in the lower part and then fixated using bolts and press fit nuts.

Thus, in one embodiment the battery unit (2) and MPPT charge controller (3) are contained within a box-shaped underpart (8) closed with a top lid (1). In a preferred embodiment the battery unit (2) and MPPT charge controller (3) are fastened to the underside, or subsurface of the top lid (1). In another preferred embodiment the top lid (1) functions as a heat sink.

By this design, direct contact between the heat sensitive components and the hot rear surface of the PV panel (6) is prevented. Other mechanical features of the present invention also serve the purpose of preventing excessively hot working conditions for the heat sensitive components, which will be described in the following.

The gap between the top lid (1) of the box-shaped underpart (8) and the rear surface of the PV panel (6) serves two important purposes: Firstly it minimizes the heat transfer between the PV panel and the box-shaped underpart (8) by preventing direct contact between the two; secondly, the gap establishes a natural channel or air duct allowing ambient air to flow in between the two surfaces and by natural convectional flow letting the heated air escape to the environment, thereby cooling both the top lid (1) and the rear surface of the PV panel (6). The gap in one embodiment has parallel sides, ie. the planes of the rear surface of the PV panel (6) and the top lid (1) are substantially parallel.

Both these functions assist in lowering the PV panel temperatures, thereby enabling suitable working conditions for the battery and electronic components of the solar power storage module mounted inside the box-shaped underpart (8).

Thus, in one embodiment there is provided a solar power storage module wherein a gap is defined between the PV panel (6) and the top lid (1) of the box-shaped underpart (8), allowing a stream of air to pass between the surfaces of the PV panel (6) and the closed box-shaped underpart (8). In a preferred embodiment the gap should be at last 10-20 mm, preferably 15 mm. The stream of air can be occasioned by natural convection, or by means of a fan or ventilator or other artificial means.

In a further embodiment a stream of air is forced or blown through the gap between the PV panel (6) and the closed box-shaped underpart (8) by the action of a cross-flow fan (21) powered by the battery unit (2) and placed below said closed box (8).

By mounting the battery and other components inside the box-shaped underpart (8) on the subsurface of the top lid (1), a volume of stationary air is created inside the box-shaped underpart (8) between the battery surface and the gap conducting the cooling stream of air. A layer of stationary air has an insulating effect, which reduces the heat transfer between the components and the rear surface of the PV solar panel. Other insulating means may be applied, such as layers of mineral or glass wool, or a porous inorganic material, such as silica aerogel or another temperature resistant, insulating material having low thermal conductivity. The inner or external surface of the box-shaped underpart (8) may for example be covered by a thin (12-25 mm) panel of a porous inorganic material, such as silica aerogel or another temperature resistant, insulating material having low thermal conductivity. In a specific embodiment a panel of MICROSIL Microporous Insulation material is employed. Closed cell insulating means may also be applied, especially under conditions of high air humidity when there is a risk of dew condensing inside the solar power storage module. A layer of closed-cell spray foam such as polyurethane foam may thus be applied.

Thus, in another embodiment there is provided a solar power storage module according to the first aspect of the present invention wherein said insulating means for reducing the heat transfer from the PV panel (6) to the battery unit (2) is comprised by the volume of stationary air inside the closed box-shaped underpart (8).

In another embodiment said insulating means for reducing the heat transfer from the PV panel (6) to the battery unit (2) further comprises a layer of insulating material selected from mineral wool, glass wool or a porous inorganic material, such as silica aerogel or another temperature resistant, insulating material having low thermal conductivity.

In yet another embodiment said insulating means for reducing the heat transfer from the PV panel (6) to the battery unit (2) comprises a layer of closed-cell spray foam, such as polyurethane foam.

Additionally, by ensuring a good contact between the subsurface of the top lid (1) and the surfaces of the battery and other components, eg. by the use of suitable heat sink paste, the top lid functions as an efficient heatsink, dissipating the generated and/or absorbed heat to the environment through the ambient air. This increase in passive cooling helps keeping the temperature on mainly the batteries low, thereby ensuring a longer battery life.

As an additional functional feature of the invention, the solar power storage module employs batteries having a flat, rectangular box-shaped form, which have a large surface-to-volume ratio. The amount of heat radiating from the rear surface of the PV panel which can absorbed by the battery is dependent on the volume and mass of the battery, but the heat removed from the battery is only dependent on its surface area. It is therefore important to employ batteries with a large surface-to-volume ratio. In a preferred embodiment Lithium-ion batteries having a flat form and thus a large surface-to-volume ratio are selected, thus maximizing the available surface area for heat dissipation.

Managing the temperature is important as most of the components have a critical max temperature that, if exceeded, will cause failure. The battery can withstand up to 80 °C without permanent damage however, for prolonged periods it should not exceed 45 °C. The panel must not exceed 85 °C as it can cause delamination and subsequent failure.

As mentioned above the solar power storage module may also be equipped with active means for removing heat. Such means include fans, preferably cross-flow fans, and thermoelectric elements, such as a Peltier device, for cooling the battery to optimal operating conditions. This may in one embodiment be accomplished by including a battery-powered fan (21) in the construction, which may boost the natural convectional flow of air through the module. In a preferred embodiment the solar power storage module is equipped with at least one electrically powered fan, such as one or more cross-flow fans which draw power from the battery unit (2).

The solar power storage module may also be equipped with a battery-powered thermoelectric element placed near or on the surface of the battery unit (2). This may be relevant for situations where the ambient air temperature is too high to efficiently cool the battery unit (2) to optimal operating conditions, even when boosted by a fan. The thermoelectric element may for example be a Peltier element.

The thermoelectric element is coupled with a small fan and two small heatsinks. When a voltage is applied to the thermoelectric element it induces a cold side and a warm side with a temperature gradient dependant on the applied voltage and the actual thermoelectric element. To each of the two sides is applied a heatsink. The heatsink attached to the cold side cools the surrounding air, which is blown out past the battery unit by the fan, thereby cooling them. Alternatively, the cold side of the thermoelectric element is attached directly to the surface of the battery.

The warm side is connected to a heatsink on the external side of the box (8), where the heat is dissipated to the ambient air. The thermoelectric element as well as the one or more fans draw power from the battery unit (2), and are controlled by a built-in microchip. A thermal sensor attached at or near the battery unit (2) tells the system when to activate.

In a specific embodiment, a battery unit is employed which comprises a thermal sensor and an integrated thermoelectric element. In an embodiment the cooling means for maintaining the battery unit (2) at a temperature not exceeding a threshold value further comprises a thermoelectric element (22) powered by the battery unit (2).

These embodiments, where active means for removing heat are included in the solar power storage module, may be relevant for geographical areas having excessively hot climates where the ambient temperature is too high to cool the battery passively. The active cooling system will run in bursts, cooling the battery for a few minutes when the thernal sensor detects treshold temperature, and then turning off.

The treshold temperature may vary between variants, but will typically be in the range of 40-55 °C.

In a further embodiment the cooling means for maintaining the battery unit (2) at a temperature not exceeding a threshold value is comprised by the stream of air passing through the gap between the PV panel (6) and the closed box-shaped underpart (8).

In yet a further embodiment the cooling means are capable of maintaining the battery unit (2) at a temperature not exceeding 55 °C. In a preferred embodiment the cooling means are capable of maintaining the battery unit (2) at a temperature not exceeding 40 °C.

As mentioned above the solar power storage module according to the present invention comes in two main variants. In one particularly preferred embodiment a Direct Current (DC) variant is provided, and in another particularly preferred embodiment an Alternating Current (AC) variant is provided. The two variants are meant for different purposes and end-uses, which are further described in the following.

**The AC variant** is capable of functioning as a PV generator with an AC output (10). This is done by adding an inverter (11) to the basic design described above, transforming the output from DC to AC. This makes the power far more useable for a large range of applications, such as radios, small electrical power tools, chargers, lighting and more.

This essentially makes the AC variant a micro PV plant with a small battery storage, ranging from 260-1000Wp power and 500-3000 kWh battery storage. The biggest advantage of this system is that it, unlike fixated installations, can be moved and easily reinstalled at another location, thus providing easy offgrid power to remote or unconnected areas.

This variant can be expanded with up to two more PV panels (6) as well as additional battery capacity (16).

By having the system tightly integrated, the end user only have to move the system to the target location, make sure its fixated and stable, connect the extra PV panels if any are present, and plug it in to go.

**The DC variant** has no inverter, but an additional input (12) for AC power, such that the load can be supported with power from the grid (or another external power supply) in case of insufficient sunlight or energy stored in the battery. This allows for extra flexibility when grid connection is a possibility, allowing the system to provide power even after the batteries are empty. The power is drawn as AC current from the grid socket through an AC/DC converter into the solar power storage module. Inside the system a switch (13) will swap between PV-panel/battery and grid power according to the current voltage of the battery.

The DC variant can either be permanently integrated in appliances running on DC, or more like a compact stand-alone DC micro solar plant with a small battery storage system. In both cases the DC/AC/DC transformation loss that is usually needed when connecting to an external appliance is avoided. As a preferred embodiment can be mentioned a solar powered air-conditioning unit, where an integrated DC variant of the solar power storage module according to the present invention supplies the DC power for an air-conditioning unit.

In another specific embodiment a DC variant of the solar power storage module is used as a stand-alone generator for telecom tower cooling systems. This embodiment functions similarly to the air-conditioning variant, as it powers a self-contained air-conditioning unit, but is not integrated into the cooling system in the same way. Additionally, this system requires an 48V output.

## Claims

1. A solar power storage module, comprising the following components:
a. a battery unit (2);
b. a PV panel (6) that charges the battery unit (2);
c. a Maximum Power Point Tracking (MPPT) charge controller (3) electrically connected to the battery unit (2) and the PV panel (6), the MPPT continuously
I. comparing the output of the PV panel (6) with the actual battery voltage,
II. converting the output of the PV panel (6) to the optimum voltage required to charge the battery unit (2);
III. supplying the required output from the PV panel (6) as well as from the battery unit (2), to match the load (10+14) and
d. optimizing the output of the PV solar panel (6) insulating means for reducing the heat transfer from the PV panel (6) to the battery unit (2), and
e. cooling means for maintaining the battery unit (2) at a temperature not exceeding a threshold value,
wherein all components a-e are contained within a single module.

2. A solar power storage module according to Claim 1 wherein the PV panel (6) is a backside contact or rear contact solar cell panel.

3. A solar power storage module according to Claim 1 or 2 wherein the battery unit (2) and MPPT charge controller (3) are contained within a box (8) closed with a top lid (1), wherein said battery unit (2) and MPPT charge controller (3) are fastened to the underside, or subsurface of the top lid (1).

4. A solar power storage module according to anyone of Claim 1-3 wherein said insulating means for reducing the heat transfer from the PV panel (6) to the battery unit (2) is comprised by the volume of stationary air inside the closed box (8).

5. A solar power storage module according to Claim 4 wherein said insulating means for reducing the heat transfer from the PV panel (6) to the battery unit (2) further comprises a layer of insulating material selected from mineral wool, glass wool or a porous inorganic material, such as silica aerogel or another temperature resistant, insulating material having low thermal conductivity.

6. A solar power storage module according to Claim 4 wherein said insulating means for reducing the heat transfer from the PV panel (6) to the battery unit (2) further comprises a layer of closed-cell spray foam such as polyurethane foam.

7. A solar power storage module according to any one of claim 2-6, wherein a gap is defined between the PV panel (6) and the closed box (8), allowing a stream of air to pass between the surfaces of the PV panel (6) and the closed box (8).

8. A solar power storage module according to Claim 7, wherein a stream of air is forced through the gap between the PV panel (6) and the closed box (8) by the action of a cross-flow fan (21) powered by the battery unit (2) and placed below said closed box (8).

9. A solar power storage module according to any one of claim 8-9, wherein the cooling means for maintaining the battery unit (2) at a temperature not exceeding a threshold value is comprised by the stream of air passing through the gap between the PV panel (6) and the closed box (8).

10. The solar power storage module according to any one of claim 7-9 wherein the gap between the PV panel (6) and the closed box (8) is between 10 and 20 mm wide, preferably 15 mm.

11. A solar power storage module according to any one of claim 8-10, wherein the cooling means for maintaining the battery unit (2) at a temperature not exceeding a threshold value further comprises a thermoelectric element (22) powered by the battery unit (2).

12. A solar power storage module according to any one of claim 1-11, being connected to one or two additional PV solar panels (6).

13. A solar power storage module according to any one of claim 1-11, further comprising one or two additional battery units (16).

14. A solar power storage module according to any one of claim 1-11, further comprising a DC to AC inverter (11), and optionally connected to up to two further PV panels (6) or a maximum panel power of 1kW and/or up to two further battery units (16).

15. A solar power storage module according to any one of claim 1-11, further comprising:
a. an additional input (12) for connecting the solar power storage module to the grid via an AC-to-DC converter, and
b. a switch (13) to enable automatic switching between PV-panel/battery and grid power according to the current voltage of the battery.
